# EUROPEAN PATENT APPLICATION

(11) **EP 0 738 559 A2**
(43) Date of publication of application: **23.10.1996**
(21) Application number: 96302808.9
(22) Date of filing: 22.04.1996
(51) Int. Cl.: B23Q 11/08

(54) **Improvements in and relating to machine tools**

(30) Priority: 22.04.1995 GB 9508208
(71) Applicant: Yamazaki Machinery UK LImited, Worcester WR4 9NF (GB)
(72) Inventor: Sato, Hirotoshi, Worcester WR4 0JE (GB); Hill, Peter Nicholas, Upton-upon-Severn, Worcs WR8 0NS (GB); Davison, James William, Malvern, Worcestershire WR14 3NS (GB)
(74) Representative: Lawrence, John

(57) **Abstract**

A machine tool (10) having a door (16), door closing means (20,22,24,26,28), and obstruction sensing means (44) adapted to react to an obstruction in the path of the door (16), the arrangement being such that if, when the door (16) is closing, it encounters an obstruction (or would encounter an obstruction) which triggers the obstruction sensing means (44) the door closing means (20,22,24,26,28) is prevented from closing the door further.

## Description

This invention relates to improvements in machine tools, and especially to their door closing mechanisms.

Machine tools, such as lathes, drilling machines, milling machines, and multi-purpose CNC machines have been known now for many tens of years. Safety has always been a major concern in their design.

It is an aim of the present invention to improve the safety of operating a machine tool.

According to a first aspect of the invention we provide a machine tool having a door, door closing means, and obstruction sensing means adapted to react to an obstruction in the path of the door, the arrangement being such that if, when the door is closing, it encounters an obstruction (or would encounter an obstruction) which triggers the obstruction sensing means the door closing means is prevented from closing the door further.

Preferably the machine tool has door opening means, and upon the obstruction sensing means sensing an obstruction the door opening means is activated to move the door in an opening direction.

Such a simple safeguard can stop users of machines which have automatically closing doors from trapping their hands, arms, or even heads, as the door automatically closes.

The obstacle sensing means may comprise a beam of light, or other e.m. radiation, but we prefer to use a load, or pressure sensor.

Preferably the load sensor is provided associated with the door closing mechanism.

Preferably the machine tool has a pneumatic (or hydraulic) piston and cylinder provided as the door closing means. The obstruction sensing means is preferably mounted on the cylinder, or piston. The obstruction sensing means may comprise a switch which closes/opens when more than a predetermined force is reacted by the cylinder or piston. The obstruction sensing means may comprise spring biasing means biasing a switch, the biasing being overcome when the door encounters an obstacle.

We may not provide a safety fence around the door area of the machine if our safety system for an automatic door closing is provided. This can save space in the factory environment, and can be cheaper.

Preferably when the machine detects an obstacle the door is opened immediately, preferably to its fully open position. When an obstruction has been detected the machine may require a manual action to commence the next machining operation (even when the machine is in automatic machining mode).

According to a second aspect of the invention we provide a method of improving the safety of a machine tool having a door that automatically closes (or closes in response to activating a switch), the method comprising stopping the door from further closing movement in the event that it contacts an obstacle.

An embodiment of the invention will now be described by way of example only with reference to the accompanying drawings of which:-
**Figure 1** shows a CNC machine tool;

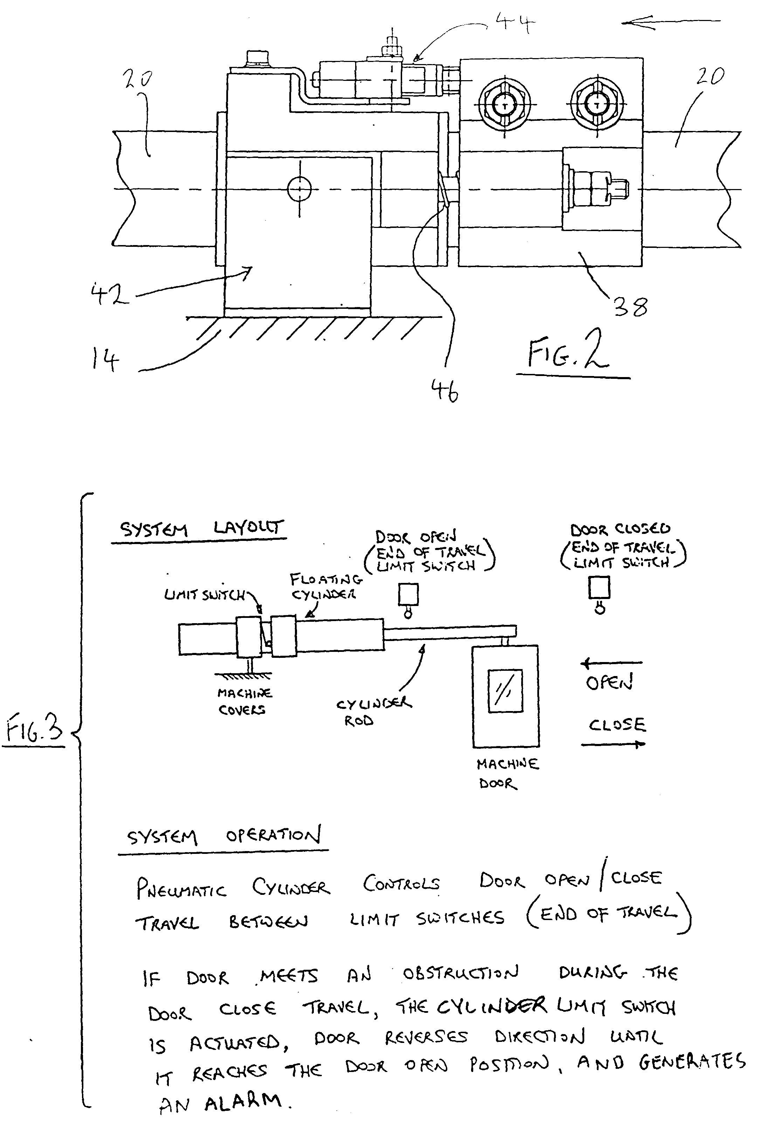

**Figure 2** shows detail of the door-operating mechanism of the machine of Figure 1;
**Figure 3** illustrates the principle of operation of the door operating mechanism;
**Figure 4** shows a flow chart illustrating the operation of closing the door;
**Figure 5** shows a flow chart illustrating the operation of opening the door; and
**Figure 6** shows a perspective view of the machine of Figure 1.

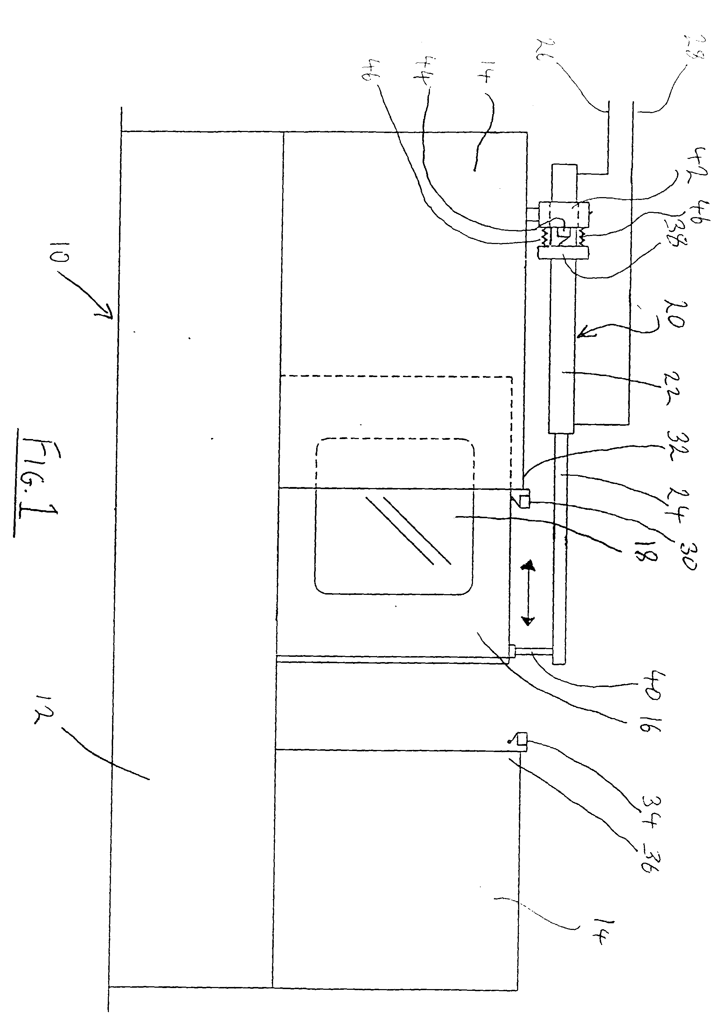

Figure 1 shows a machine tool 10, in this example a CNC lathe, having a bed 12, a housing 14, a sliding door 16 having a window 18, and a door-operating mechanism 20.

The door operating mechanism 20 comprises a pneumatic cylinder 22 and piston 24; air lines 26 and 28 controlling the operation of the piston and cylinder; an "open" limit switch 30 mounted on a first part, part 32, of the housing; a "closed" limit switch 34 mounted on a second part, part 36, of the housing; and a collar 38 fixed to the cylinder 22.

The piston 24 is attached to the door 16 by an arm 40. The cylinder is held to the housing 14 by a bracket 42 which has a cylindrical hole through which the cylinder 22 extends in a "floating" manner such that the cylinder can slide in its elong direction relative to the bracket 42. A load sensitive switch 44 is provided between the collar 38 and the bracket 42. A pair of springs, in this example compression springs 46, are provided fixed at one end to the bracket 42 and at their other end to the collar 38. The switch 44, and indeed the switches 30 and 34, are spring microswitches.

The springs bias the collar 38, fixed to the cylinder 22, and the bracket 42, fixed to the housing, apart. They also help to locate the position of the cylinder relative to the collar.

When the cylinder 22 is operated to close the door the piston 24 applies a force in the door closing direction to the door. This force is reacted back through the cylinder 22, through the collar 38, and springs 46, to the bracket 42 and housing 14. The door closing force is not enough to overcome the springs 46 and close the switch 44.

If the door meets an obstacle, for example a user's arm or hand, an extra force is reacted back to the collar 38. This obstruction reaction force is enough to close the switch 44. This causes the cylinder 22 to be operated so as to open the door, moving it away from the obstacle. The door moves open to its fully open position. The level of force necessary to close the switch 44 is set (by the choice of the springs 46) such that if the door shuts on an operator's hand or arm it will not normally break any bones, or even hurt or bruise too much.

For the sake of example the force necessary to close switch 44 is, in this example 150N, but it could be 50N, 100N, 200N, 400N, or of any suitable magnitude.

The machine tool 10 is arranged such that it cannot start operating on a workpiece until the door 16 is closed.

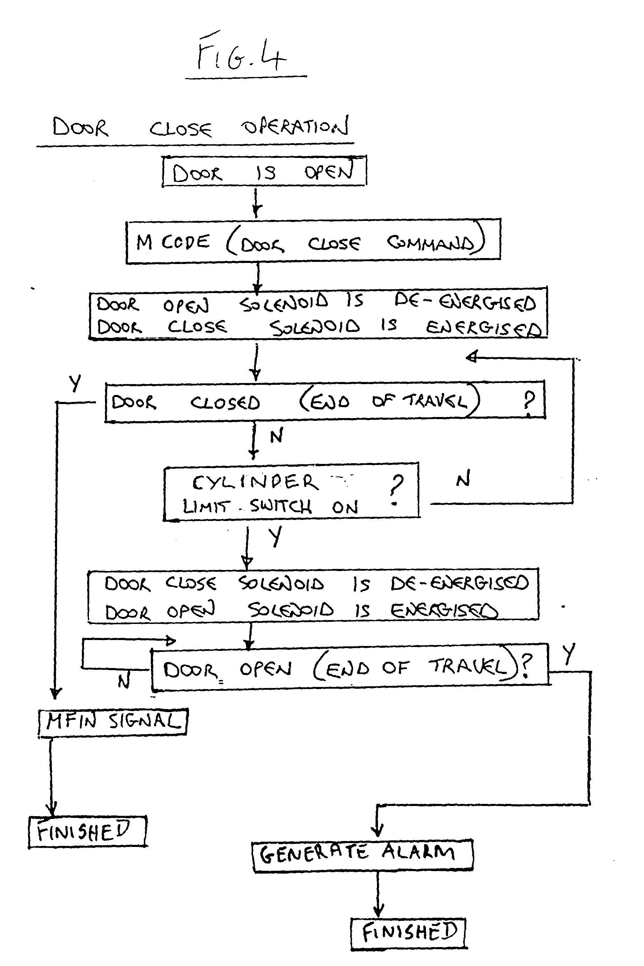

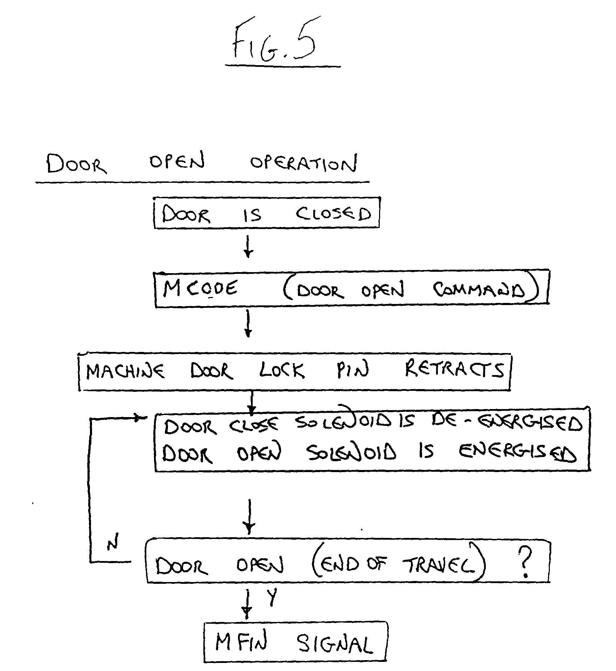

Figures 4 and 5 illustrate in flow chart form the operations of closing and opening the door. It will be appreciated that their references to energising/deenergising solenoids are references to operating solenoid valves that control the supply of air to the pneumatic cylinder 22 (which is of the push/pull (or double-acting) type so as to be able to slide the door backwards and forwards to open and close the door).

The machine 10 has an automatic mode in which the door is opened/closed by the machine automatically (in response to its programming). The machine also has a manual mode in which the door can be opened and closed by a user. The user must use two hands, one to operate one control and another to operate a second control (eg a toggle switch and a key). This is intended to ensure that the user has no free hands to trap in the door. It can also ensure that the user has to stand away from the door.

The door operating mechanism may be fitted as original equipment or as a kit for retro-fitting to existing machines. Indeed, we wish to protect a kit for retrofitting, and original equipment. The use of a pneumatic arm, with a simple spring-loaded sensor is (in our view) better than alternative ways of detecting an object. It is perhaps surprising that no-one has thought of this simple system before.

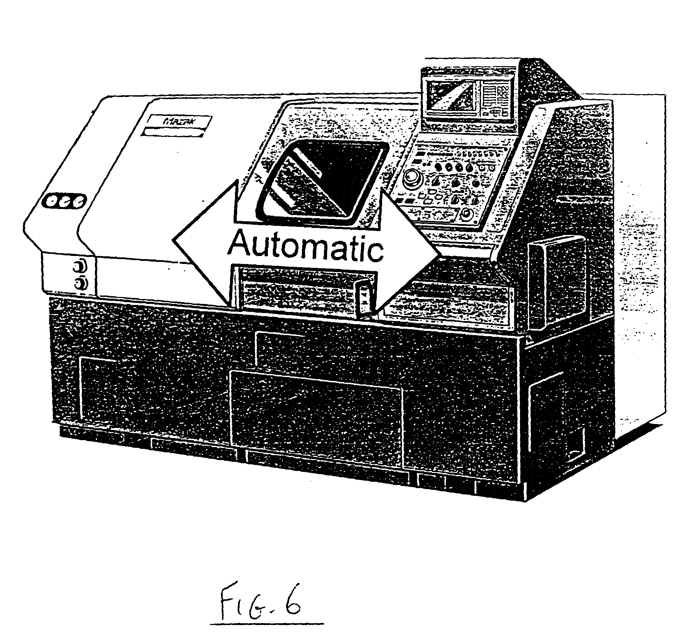

It will be appreciated that, as shown in Figure 6, with the new safety mechanism on the automatic door closing we do not need, necessarily, to provide a safety fence around the machine. We may still provide a safety fence, especially if we intend to load the machine using a robot.

## Claims

1. A machine tool (10) having a door (16), door closing means (20,22,24,26,28) and obstruction sensing means (44) adapted to react in an obstruction in the path of the door (16), the arrangement being such that if, when the door (16) is closing, it encounters an obstruction (or would encounter an obstruction) which triggers the obstruction sensing means (44) the door closing means (20,22,24,26,28) is prevented from closing the door further.

2. A machine tool (10) according to claim 1 which has door opening means (20,22,24,26,28) and is arranged such upon the obstruction sensing means (44), sensing an obstruction the door opening means (20,22,24,26,28) is activated to move the door in an opening direction.

3. A machine tool (10) according to claim 1 or claim 2 in which the obstacle sensing means (44) comprises a load or pressure sensor.

4. A machine tool(10) according to claim 4 in which the load sensor (44) is provided associated with the door closing mechanism (20,22,24,26,28).

5. A machine tool (10) according to any preceding claim which has a pneumatic (or hydraulic) piston (24) and cylinder (22) provided as the door closing means (20,22,24,26,28).

6. A machine tool (10) according to any preceding claim in which the obstruction sensing means (44) comprises a switch which closes or opens when more than a predetermined force is reacted by the cylinder or piston.

7. A machine tool (10) according to any preceding claim in which the obstruction sensing means (44) comprises spring biasing means (46) biasing a switch (44), the biasing being overcome when the door encounters an obstacle.

8. A machine tool (10) according to any preceding claim which is arranged such that when the machine detects an obstacle the door is opened immediately, preferably to its fully open position.

9. A machine tool (10) according to any preceding claim which is arranged such that when an obstruction has been detected the machine requires a manual action to commence the next machining operation (even when the machine is in automatic machining mode).

10. A method of improving the safety of a machine tool (10) having a door (16) that automatically closes (or closes in response to activating a switch), the method comprising stopping the door from further closing movement in the event that it contacts an obstacle.
